# EUROPEAN PATENT SPECIFICATION

(11) **EP 2 886 617 B1**
(45) Date of publication and mention of the grant of the patent: **20.02.2019**
(21) Application number: 14198397.3
(22) Date of filing: 17.12.2014
(51) Int. Cl.: C09D 5/33

(54) **Reflecting product**
Reflektierendes Produkt
Produit réfléchissant

(30) Priority: 19.12.2013 BE 201300851
(43) Date of publication of application: 24.06.2015
(73) Proprietor: Cojacks BVBA, 2970 Schilde (BE)
(72) Inventor: Verschueren, Philippe, 2970 Schilde (BE)
(74) Representative: Pappaert, Kris

(56) References cited:
- GB-A- 586 595
- US-A- 2 407 680

## Description

### Technical field

The present invention relates to a reflecting product comprising a carrier and a pattern, the pattern consisting of at least two different coatings with virtually identical colours but with different reflecting properties. As a result of the combination of these coatings, the pattern seen at night differs from that seen in the daytime.

### Background of the invention

Reflecting products such as safety elements are known principally from the safety vests worn in the evening by, for instance, car drivers, sports people or workers working in the street, but other forms of such safety elements in the form of strips, stickers, posters or gadgets are also frequently seen. The main function of such safety elements is to increase the wearer's visibility in traffic, but more generally they can also be used to draw the attention of drivers or passers-by in the evening (for instance in sign boards).

In conventional safety elements such as safety vests, a conspicuous (fluorescent) colour of the textile is often combined with reflecting strips as illustrated in US2407680. Typically, the colours of the textile contrast strongly with the reflecting colours so as to ensure enough contrast. Users of such safety vests often indicate that, while the vests have clearly proved useful at night, there is no need for the reflecting strips or colours in the daytime. The reflecting strips on the contrasting background make it clear that this is a safety vest. The consequence is often that such vests are not used in the daytime because they are not very attractive and do not look fashionable. The vests are often put aside in the daytime, as a result of which they are often forgotten at night.

Moreover, panels or billboards that are well visible in the daytime cannot or can hardly be seen at night, unless they are provided with separate illumination. Non-illuminated billboards are considered economically less efficient as they have adequate visibility only during a limited period.

The present invention offers a solution to the problems with the current conventional safety elements as indicated here.

### Summary of the invention

The invention and its preferred embodiments offer a solution to one or more of the above-mentioned needs.

In a first aspect, the invention comprises a reflecting product, and preferably a reflecting safety element, comprising a carrier and a pattern, the pattern consisting of at least two different coatings, characterised in that both coatings have virtually identical colours and wherein both coatings have different reflecting properties. According to the invention, the carrier is a textile.

In a second aspect, the invention comprises a method for making the reflecting products described herein, and preferably reflecting safety elements, characterised in that the method comprises steps for depositing at least two different coatings that have virtually identical colours and wherein both coatings have different reflecting properties.

In a third aspect, the invention comprises the use of at least two different coatings that have virtually identical colours and wherein both coatings have different reflecting properties in a reflecting product, and preferably a reflecting safety element.

### Brief description of the figures

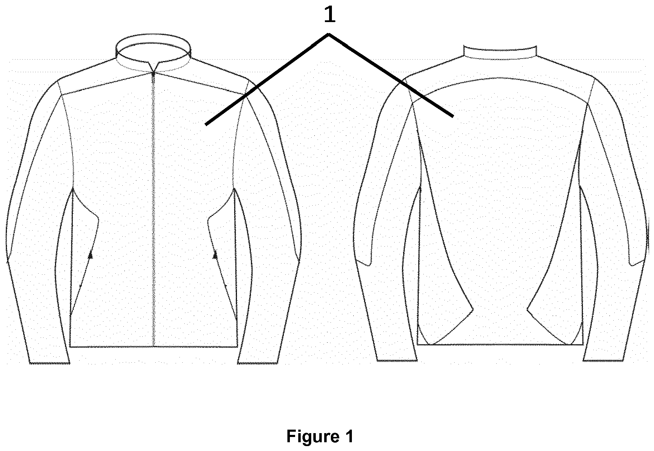

Figure 1 shows an example of a carrier for application of the pattern according to the present invention.
Figure 2 (A to D) shows various patterns according to the present invention as visible in the daytime (left-hand column) and at night (right-hand column).

### Detailed description of the invention

As used further in this text, the singular forms "a", "an" and "the" comprise both the singular and the plural form, unless the context clearly indicates otherwise.

The terms "comprise" and "comprises" as used herein are synonymous with "inclusive", "include" or "contain" and "contains" and are inclusive or open, not excluding additional, non-mentioned members, elements or method steps. The terms "comprise" and "comprises" are inclusive of the term "contain".

The list of numerical values on the basis of ranges of figures comprises all values and fractions within these ranges as well as the quoted end points.

The term "approximately" or "virtually", as used in reference to a measurable value such as a parameter, a quantity, a period of time, etc., is meant to cover variations of +/-10% or less, preferably +/-5% or less, more preferably +/-1% or less, and even more preferably +/-0.1% or less, of and from the specified value, in so far as the variations are applicable for use in the disclosed invention. It shall be understood that the value to which the term "approximately" refers was also disclosed.

All documents cited in the present specification are fully incorporated herein by reference.

Unless defined otherwise, all terms disclosed in the invention, including technical and scientific terms, have the meaning commonly attached to them by a person skilled in the art. As a further guideline, definitions are included for further explanation of terms used in the description of the invention.

The present invention generally concerns reflecting products, and preferably reflecting safety elements, that comprise at least two types of coatings or paints, wherein both coatings or paints have virtually identical colours but wherein both have different reflecting or light-reflecting properties. More in particular, only one of the two coatings is reflecting or light-reflecting and preferably only one of the two coatings is retro-reflective.

The term "reflecting product" is herein understood to mean articles or objects whose function is to draw the attention of passers-by and other persons. The reflecting product may assume different forms and may for instance be the whole or part of a marking, sign or eye-catcher that is conspicuous in the dark because of its reflecting properties. The reflecting product may for instance be incorporated in a panel, poster or billboard so that the entire panel, poster or billboard, or part of it, is visible in the dark or at dusk when light shines on it, while in the daytime the panel, poster or billboard has its normal function.

Preferably, the reflecting product is a reflecting safety element. The term "safety element" is herein understood to mean articles or objects whose function is to draw the attention of passers-by and other persons, and this preferably to guarantee the safety of the wearer of the safety element. Furthermore, a safety element is also considered to be a mark, sign or eye-catcher that is conspicuous in the dark because of its reflecting properties. The safety element may be a piece of textile, but also a gadget, poster, car or car part, sticker, sign board, road marking, etc., a common feature being that part of the safety element is well visible particularly in the dark or at dusk when light shines on it.

Non-illuminated panels, posters or billboards offer inadequate visibility at night so that they are of lower economic value to advertisers. The use of the reflecting product according to the present invention ensures that the panel, poster or billboard is seen as a normal board in the daytime, while in the dark or at dusk, when light from passers-by shines on it, the reflecting product generates added value by showing a specific pattern that preferably differs from the pattern visible in the daytime.

The term "coating" is herein understood to mean a substance with which all or part of the surface of a carrier material is treated and which gives a high added value to the carrier material. In the present invention, a paint can be used as coating to generate a carrier that has reflecting properties. The coating is typically directly applied to the carrier, or via a base layer (see further).

The term "reflecting" or "light-reflecting" is herein understood to mean that the material reflects electromagnetic radiation (preferably light). There are different types of reflection, such as directed reflection, diffuse reflection, multiple reflection or retroflection (or retro-reflection).

In directed reflection, the direction of propagation of the wave front does change but the wave remains bundled, as in a mirror. In diffuse reflections, light is scattered in all directions and the light intensity is usually the same in all directions. In multiple reflection, both internal and external reflection occurs, resulting in diffuse reflection. Retro-reflection is a directed reflection in which all incident waves are reflected in parallel to and opposite to the direction of incidence. It is a combination of two reflections on two perpendicular surfaces. A surface can be given strongly retro-reflecting properties by applying a layer of reflecting spheres or pyramids on it. As a result of internal reflection, the wave is more or less reflected to where it came from. This is used among other things for reflecting traffic signs, roadside reflectors, road markings, etc., and for reflecting strips on clothing and police cars. Coatings or paints with retro-reflecting properties are known to the person skilled in the art.

"Reflecting properties" or "light-reflecting properties" are herein understood to mean the properties of the reflecting material, and more in particular properties such as the refractive index of the material or the coating. Typically, microglass spheres with a high refractive index are used in coatings with retro-reflecting properties.

In a first aspect, the invention comprises a reflecting product, and preferably a reflecting safety element, comprising a carrier (1) and a pattern (2), wherein the pattern consists of at least two different coatings, characterised in that both coatings have virtually identical colours and wherein both coatings have different reflecting properties. More in particular, only one of the two coatings is reflecting or light-reflecting.

By providing at least two coatings with virtually identical colours, both coatings are seen as identical in the daytime, while at dusk or at night they are clearly distinguishable from each other on account of the different reflecting properties, with preferably only one of the two coatings being visible. In this way, the pattern will look different in the daytime and at night, so that numerous possible combinations may be used.

The pattern typically does not cover the entire surface of the carrier, such that parts of the carrier are still visible. Preferably, the coatings of the pattern have colours which are different from the colour(s) of the carrier, thereby providing contrast between the pattern and the carrier. In this way, the carrier is provided with a distinctive pattern, said pattern having a different appearance in the daytime and at night. In particular embodiments, the carrier essentially has a single colour, which is different from the coatings of the pattern provided on the carrier.

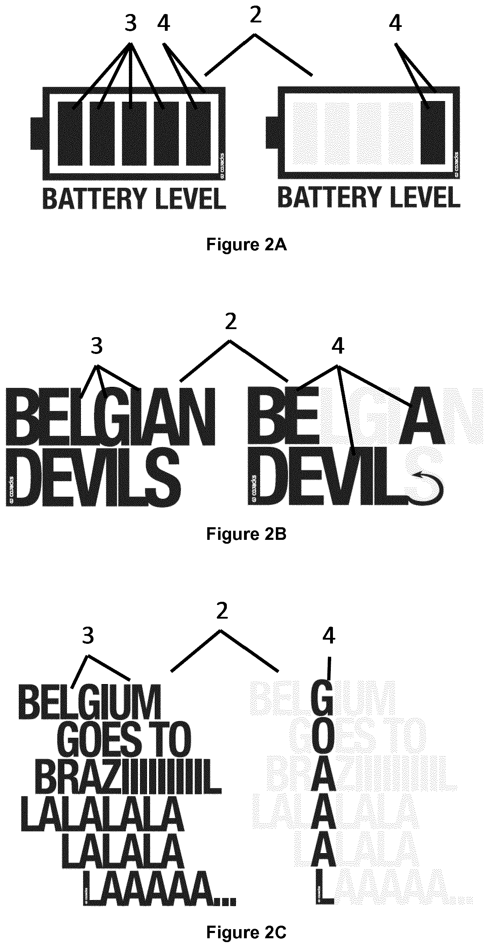

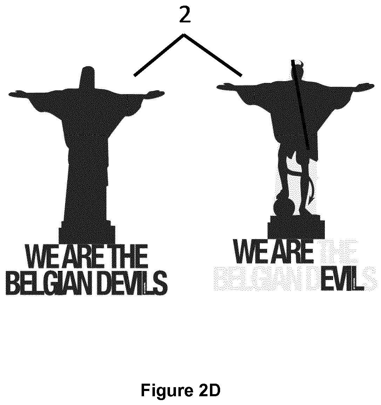

Figure 2 (A to D) gives a number of examples of how a certain pattern looks in the daytime (left-hand column) and how the same pattern looks at night (right-hand column). By using a first coating (3) that is not reflecting and not visible at night and a second coating (4) that is reflecting and visible at night, a technical effect is generated that could not be anticipated. By using virtually identical colours for both coatings, hardly any difference is visible between them also in the daytime and the user will see it as a single colour, so that the reflecting product, and preferably the reflecting safety element, is not immediately seen to be a reflecting product in the daytime. At night, the pattern ensures good visibility of the wearer. In this way, users will also use the reflecting product, and preferably the reflecting safety element, in the daytime, which promotes the user's safety and visibility both at night and in the daytime.

In a preferred embodiment, the reflecting product, and preferably the reflecting safety element, according to the present invention is characterised in that only one of the two coatings is a retro-reflective coating. By providing only one of the two coatings as a retro-reflective coating it is ensured that the patterns visible in the daytime and at night can be varied. The daytime pattern may for instance be a beautiful and fashionable drawing, while the visible reflecting pattern at night serves to ensure the wearer's visibility. The reflecting pattern may for instance be adapted to the shape of the object to which it is attached, so that the reflection clearly shows the object's outlines. The difference between the pattern in the daytime and at night can also be used in, for instance, adaptive traffic signalisation. One and the same sign board or marking can thus present an adapted message in the daytime and at night. Where a road marking is just a line in the daytime, when the signs are clearly visible, that same road marking may for instance have an arrow shape indicating the direction of travel at night, when the signs are also less visible.

In a preferred embodiment, the reflecting product, and preferably the reflecting safety element, according to the present invention is characterised in that the pattern (2) comprises a base layer (which is applied directly to the carrier) on which both coatings are applied. The base layer provides good adhesion of the coating and ensures that the coating cannot easily be removed. In a preferred embodiment, the reflecting product, and preferably the reflecting safety element, according to the present invention is characterised in that the carrier (1) is textile. In this way, the reflecting product can be used as clothing, can be provided as posters and stickers which are easily adapted to the surface to which they are to be applied, etc.

In a preferred embodiment, the reflecting product, and preferably the reflecting safety element, according to the present invention is characterised in that the carrier (1) is a woven, knitted or non-woven fabric.

In a preferred embodiment, the reflecting product, and preferably the reflecting safety element, according to the present invention is characterised in that the carrier (1) is an article of clothing, preferably an article of clothing for use during sporting activities such as running, walking, skating, roller skating or cycling. The use of a soft carrier such as textile ensures that the safety element can be used especially by more vulnerable road users.

In a preferred embodiment, the reflecting product, and preferably the reflecting safety element, according to the present invention is characterised in that the at least two different coatings are paints. Examples of typical paints that can preferably be used are Texilac Cat Eye as retro-reflecting coating in combination with another textile paint having a virtually identical colour. Preferably, both coatings have a grey colour. Additionally or alternatively, the coatings may have a colour which is different from, and preferably contrasts with, the colour(s) of the carrier. More in particular, both coatings are preferably characterised by their RGB colour code value. More specifically, the R, G, and B values of the coatings lie between 130 and 230, preferably between 150 and 220, preferably between 170 and 210, and preferably 130, 140, 150, 160, 170, 180, 190, 200, 210, 220 or 230. The variation between the R, G, and B values of both coatings differs by at most 10 units. Preferably, both coatings have an RGB colour code value wherein the R, G, and B values lie between 130 and 230 and wherein the R, G, and B values are equal.

In particular embodiments, at least one of the R, G, and B values of each of both coatings differs from the corresponding value of the carrier by at least 10 units, preferably at least 20 units, and more preferably at least 50 units.

The RGB colour system is a colour coding, a way of expressing a colour by means of a combination of the three primary colours Red-Green-Blue, based on additive colour mixing. The amount of each primary colour needed to obtain the mixed colour is expressed in a number that consists of 8 bits and may vary between 0 and 255.

In the alternative, both coatings are preferably characterised by their CMYK colour code value, wherein the C value lies between 0 and 10%, the M value lies between 0 and 10%, the Y value lies between 0 and 10%, and the K value lies between 5 and 55%. Preferably, the C value lies between 0 and 8%, between 0 and 6%, between 0 and 4%, between 0 and 2%, and preferably between 0 and 1%. Preferably, the M value lies between 0 and 8%, between 0 and 6%, between 0 and 4%, between 0 and 2%, and preferably between 0 and 1%. Preferably, the Y value lies between 0 and 8%, between 0 and 6%, between 0 and 4%, between 0 and 2%, and preferably between 0 and 1%. Preferably, the K value lies between 7.5 and 50%, between 10 and 45%, between 12.5 and 40%, between 15 and 35%, and preferably between 17 and 33%. In particular embodiments, at least one of the C, M, Y, and K values of each of both coatings differs from the corresponding value of the carrier by at least 5%.The CMYK (Cyan, Magenta, Yellow, Key) colour system is a system for obtaining a large number of colours with four basic colours, including black, by subtractive colour mixing. This system is used especially for printing inks. C stands for Cyan (in additive colour mixing a combination of green and blue light); M stands for Magenta, a combination of red and blue light; Y stands for Yellow, a combination of red and green light; K stands for Key, black. The CMYK code for a colour is represented by the coverage percentage of the four inks needed to obtain that colour. When we plot the basic colours along three axes, we obtain the CMYK colour cube.

In a preferred embodiment, the reflecting product, and preferably the reflecting safety element, according to the present invention is characterised in that both coatings have the same CMYK colour code value and/or RGB colour code value. In further preferred embodiments, both coatings have the same CMYK colour code value and/or RGB colour code value, which is different from the CMYK colour code value and/or RGB colour code value of the carrier.

In a preferred embodiment, the reflecting product, and preferably the reflecting safety element, according to the present invention is characterised in that the first coating is visible only in the daytime and the second coating is visible both in the daytime and at night.

In a preferred embodiment, the reflecting product, and preferably the reflecting safety element, according to the present invention is characterised in that the first and the second coating are positioned at different locations and do not overlap.

In a second aspect, the present invention provides a method for making a reflecting product, and preferably a reflecting safety element, according to the present invention, characterised in that the method comprises steps for depositing at least two different coatings that have virtually identical colours and wherein both coatings have different reflecting properties. Preferably, only one of the two coatings is reflecting, and even more preferably retro-reflecting.

The printing technique that can for instance be used for textile printing is screen printing or serigraphy. The principle of the screen printing technique is rather simple. A piece of fine silk, polyester or steel gauze is stretched across a frame. The screen printing frame is subsequently provided with a light-sensitive layer that is exposed by means of a positive film. The dark planes present on the positive are washed away upon development so that permeable places are formed on the screen print frame, where the ink is squeezed through. The ink is applied to the frame and spread with the aid of a squeegee, so that the form of the stencil is printed on the object to be imprinted (the image carrier). This technique can be repeated with different colours and shapes that are printed beside or on top of each other.

In a further aspect, the present invention provides the use of at least two different coatings that have virtually identical colours and wherein both coatings have different reflecting properties in a reflecting product, and preferably a reflecting safety element. Preferably, only one of the two coatings is reflecting, and even more preferably retro-reflecting.

## Claims

1. Reflecting product, comprising a carrier (1) and a pattern (2) consisting of at least two different coatings, **characterised in that** both coatings have virtually identical colours and wherein both coatings have different reflecting properties; and **in that** the carrier (1) is a textile.

2. Reflecting product according to Claim 1, **characterised in that** only one of the two coatings is a retro-reflective coating.

3. Reflecting product according to Claim 1 or 2, **characterised in that** the pattern (2) comprises a base layer on which both coatings are applied.

4. Reflecting product according to any one of Claims 1 to 3, **characterised in that** the carrier (1) is a woven, knitted or non-woven fabric.

5. Reflecting product according to any one of Claims 1 to 4, **characterised in that** the carrier (1) is an article of clothing, preferably for use during sporting activities such as running, walking, skating, roller skating or cycling.

6. Reflecting product according to any one of Claims 1 to 5, **characterised in that** the at least two different coatings are paints.

7. Reflecting product according to any one of Claims 1 to 6, wherein the at least two different coatings are paints, **characterised in that** both have a colour which is different from the colour of the carrier.

8. Reflecting product according to Claim 7, **characterised in that** both coatings have an RGB colour code value wherein the R, G, and B values lie between 130 and 230, and wherein the variation between the R, G, and B values differs by at most 10.

9. Reflecting product according to Claim 8, wherein both coatings have a CMYK colour code value wherein the C value lies between 0 and 10%, the M value lies between 0 and 10%, the Y value lies between 0 and 10%, and the K value lies between 5 and 55%.

10. Reflecting product according to any one of Claims 1 to 9, **characterised in that** both coatings have the same CMYK colour code value and/or RGB colour code value.

11. Reflecting product according to any one of Claims 1 to 10, **characterised in that** the first coating is visible only in the daytime and the second coating is visible both in the daytime and at night.

12. Reflecting product according to any one of Claims 1 to 11, **characterised in that** the first and the second coating are positioned at different locations and do not overlap.

13. Method for making a reflecting product according to any one of Claims 1 to 12, **characterised in that** the method comprises steps for depositing at least two different coatings that have virtually identical colours and wherein both coatings have different reflecting properties.

14. Use of at least two different coatings that have virtually identical colours and wherein both coatings have different reflecting properties; on a textile carrier.

## Patentansprüche

1. Reflektierendes Produkt, umfassend einen Träger (1) und ein Muster (2), das aus mindestens zwei verschiedenen Beschichtungen besteht, **dadurch gekennzeichnet, dass** beide Beschichtungen praktisch identische Farben aufweisen und wobei beide Beschichtungen unterschiedliche reflektierende Eigenschaften aufweisen; und dass der Träger (1) ein Textilmaterial ist.

2. Reflektierendes Produkt nach Anspruch 1, **dadurch gekennzeichnet, dass** nur eine der zwei Beschichtungen eine retroreflektierende Beschichtung ist.

3. Reflektierendes Produkt nach Anspruch 1 oder 2, **dadurch gekennzeichnet, dass** das Muster (2) eine Basisschicht umfasst, auf der beide Beschichtungen aufgebracht sind.

4. Reflektierendes Produkt nach einem der Ansprüche 1 bis 3, **dadurch gekennzeichnet, dass** der Träger (1) ein Gewebe, Gewirke oder Vlies ist.

5. Reflektierendes Produkt nach einem der Ansprüche 1 bis 4, **dadurch gekennzeichnet, dass** der Träger (1) ein Bekleidungsartikel ist, vorzugsweise zur Verwendung bei sportlicher Betätigung, wie etwa Laufen, Gehen, Skaten, Rollschuhlaufen oder Radfahren.

6. Reflektierendes Produkt nach einem der Ansprüche 1 bis 5, **dadurch gekennzeichnet, dass** die mindestens zwei verschiedenen Beschichtungen Lacke sind.

7. Reflektierendes Produkt nach einem der Ansprüche 1 bis 6, wobei die mindestens zwei verschiedenen Beschichtungen Lacke sind, **dadurch gekennzeichnet, dass** beide eine Farbe haben, die sich von der Farbe des Trägers unterscheidet.

8. Reflektierendes Produkt nach Anspruch 7, **dadurch gekennzeichnet, dass** beide Beschichtungen einen RGB-Farbcodewert aufweisen, wobei die R-, G- und B-Werte zwischen 130 und 230 liegen, und wobei die Variation zwischen den R-, G- und B-Werten um höchstens 10 schwankt.

9. Reflektierendes Produkt nach Anspruch 8, wobei beide Beschichtungen einen CMYK-Farbcodewerte aufweisen, wobei der C-Wert zwischen 0 und 10% liegt, der M-Wert zwischen 0 und 10% liegt, der Y-Wert zwischen 0 und 10% liegt und der K-Wert zwischen 5 und 55% liegt.

10. Reflektierendes Produkt nach einem der Ansprüche 1 bis 9, **dadurch gekennzeichnet, dass** beide Beschichtungen denselben CMYK-Farbcodewert und/oder RGB-Farbcodewert aufweisen.

11. Reflektierendes Produkt nach einem der Ansprüche 1 bis 10, **dadurch gekennzeichnet, dass** die erste Beschichtung nur am Tag sichtbar ist und die zweite Beschichtung sowohl am Tag als auch in der Nacht sichtbar ist.

12. Reflektierendes Produkt nach einem der Ansprüche 1 bis 11, **dadurch gekennzeichnet, dass** die erste und die zweite Beschichtung an verschiedenen Stellen angeordnet sind und sich nicht überlappen.

13. Verfahren zur Herstellung eines reflektierenden Produkts nach einem der Ansprüche 1 bis 12, **dadurch gekennzeichnet, dass** das Verfahren Schritte zum Abscheiden mindestens zwei verschiedener Beschichtungen umfasst, die praktisch identische Farben haben und wobei beide Beschichtungen unterschiedliche reflektierende Eigenschaften aufweisen.

14. Verwendung von mindestens zwei verschiedenen Beschichtungen, die praktisch identische Farben haben und wobei beide Beschichtungen unterschiedliche reflektierende Eigenschaften aufweisen; auf einem Textilträger.

## Revendications

1. Produit réfléchissant comprenant un support (1) et un motif (2) se composant d'au moins deux revêtements différents, **caractérisé en ce que** les deux revêtements présentent des couleurs virtuellement identiques et dans lequel les deux revêtements présentent des propriétés réfléchissantes différentes ; et **en ce que** le support (1) est un textile.

2. Produit réfléchissant selon la revendication 1, **caractérisé en ce qu'**un seul des deux revêtements est un revêtement rétroréfléchissant.

3. Produit réfléchissant selon la revendication 1 ou 2, **caractérisé en ce que** le motif (2) comprend une couche de base sur laquelle les deux revêtements sont appliqués.

4. Produit réfléchissant selon l'une quelconque des revendications 1 à 3, **caractérisé en ce que** le support (1) est un tissu tissé, tricoté ou non tissé.

5. Produit réfléchissant selon l'une quelconque des revendications 1 à 4, **caractérisé en ce que** le support (1) est un article vestimentaire, de préférence destiné à être utilisé pendant des activités sportives telles que la course à pied, la marche, le patinage, le patinage à roulettes ou le cyclisme.

6. Produit réfléchissant selon l'une quelconque des revendications 1 à 5, **caractérisé en ce que** les deux, ou plus, revêtements différents sont des peintures.

7. Produit réfléchissant selon l'une quelconque des revendications 1 à 6, dans lequel les deux, ou plus, revêtements différents sont des peintures, **caractérisé en ce que** les deux présentent une couleur qui est différente de la couleur du support.

8. Produit réfléchissant selon la revendication 7, **caractérisé en ce que** les deux revêtements présentent une valeur de code de couleur RVB dans lequel les valeurs de R, de V et de B se trouvent entre 130 et 230 et dans lequel la variation entre les valeurs de R, de V et de B diffère d'au maximum 10.

9. Produit réfléchissant selon la revendication 8, dans lequel les deux revêtements présentent une valeur de code de couleur CMJN dans lequel la valeur de C se trouve entre 0 et 10 %, la valeur de M se trouve entre 0 et 10 %, la valeur de J se trouve entre 0 et 10 % et la valeur de N se trouve entre 5 et 55 %.

10. Produit réfléchissant selon l'une quelconque des revendications 1 à 9, **caractérisé en ce que** les deux revêtements présentent la même valeur de code de couleur CMJN et/ou la même valeur de code de couleur RVB.

11. Produit réfléchissant selon l'une quelconque des revendications 1 à 10, **caractérisé en ce que** le premier revêtement est visible seulement pendant la journée et le second revêtement est visiblement à la fois pendant la journée et la nuit.

12. Produit réfléchissant selon l'une quelconque des revendications 1 à 11, **caractérisé en ce que** le premier et le second revêtement sont positionnés à des emplacements différents et ne se chevauchent pas.

13. Procédé pour fabriquer un produit réfléchissant selon l'une quelconque des revendications 1 à 12, **caractérisé en ce que** le procédé comprend des étapes pour déposer au moins deux revêtements différents qui présentent des couleurs virtuellement identiques et dans lequel les deux revêtements présentent des propriétés réfléchissantes différentes.

14. Utilisation d'au moins deux revêtements différents qui présentent des couleurs virtuellement identiques et dans lequel les deux revêtements présentent des propriétés réfléchissantes différentes ; sur un support textile.
